# EUROPÄISCHE PATENTANMELDUNG

(11) **EP 0 779 388 A2**
(43) Veröffentlichungstag der Anmeldung: **18.06.1997**
(21) Anmeldenummer: 96117974.4
(22) Anmeldetag: 08.11.1996
(51) Int. Cl.: D06F 37/30

(54) **Antriebsvorrichtung für eine von vorn beschickbare Waschmaschine**

(30) Priorität: 11.12.1995 DE 19546185
(71) Anmelder: Bosch-Siemens Hausgeräte GmbH, 81669 München (DE)
(72) Erfinder: Neumann, Wolfgang, 13629 Berlin (DE)

(57) **Zusammenfassung**

Die Antriebsvorrichtung ist an der Rückwand 6 eines Laugenbehälters 1 anstelle eines steifen Tragteils angebracht und mit einer über eine wenigstens annähernd horizontal liegende Welle 7 fliegend gelagerten Wäschetrommel 4 verbunden, die durch einen mit der Rückwand 6 des Laugenbehälters 1 fest verbundenen Flachmotor 9 direkt angetrieben ist. Dabei ist der Stator 10 bis 12 des Flachmotors mit dem steifen Tragteil 10 verbunden, das eine zentrale Lagerhülse für den Rotor und die Welle aufweist. Der Stator bildet eine scheibenförmige Kammer, in der der Rotor 13, 14 des Flachmotors 9 läuft und mit einem aus der Lagerhülse nach hinten austretenden Ende der Welle 7 über eine Nabe drehfest verbunden ist, die über Wälzlager mit dem steifen Tragteil 10 bzw. mit dem Stator 10 bis 12 drehbar verbunden ist.

## Beschreibung

Die Erfindung betrifft eine Antriebsvorrichtung für eine von vom beschickbare Waschmaschine mit einer innerhalb einer Lagerhülse eines an der Rückwand eines Laugenbehälters angebrachten, steifen Tragteils über eine wenigstens annähernd horizontal liegende Welle fliegend gelagerten Wäschetrommel, die durch einen ebenfalls an der Rückseite des Laugenbehälters angebrachten Flachmotor direkt angetrieben ist.

Eine solche Antriebsvorrichtung ist aus der DE 39 27 426 A1 bekannt. Darin ist der Stator des als kollektorloser Außenläufer-Gleichstrommotor ausgebildeten Flachmotors unmittelbar auf der Lagerhülse des steifen Tragteils befestigt. Die Welle ist in der Lagerhülse gelagert und an ihrem äußeren Ende mit dem Läufer des Flachmotors drehfest verbunden. Dieser Läufer ist hier ein sogenannter Außenläufer, der als Topf die Statorwicklungen übergreift und als Permanentmagnete ausgebildete Pole trägt.

Die bekannte Antriebsvorrichtung ist nicht als bereits fertig montierter Motor an das Herstellerwerk von Waschmaschinen lieferbar. Sein Stator und sein Läufer müssen getrennt angeliefert und im Waschmaschinenwerk erst miteinander montiert werden. Da in der Regel in einem Waschmaschinenwerk keine speziellen Montageeinrichtungen zur Komplettierung von Motorbaugruppen vorhanden und auch nicht gewünscht sind, dürfte die Komplettierung der zunächst mit dem Laugenbehältersystem zu verbindenden Statorbaugruppe durch die Außenläufer-Baugruppe regelmäßig nur ungenau erfolgen. Da an die Einhaltung eines kleinen und bei jedem Exemplar möglichst immer gleich großen Luftspalts zwischen den Statorwicklungen und den Läuferpolen sowie an die zentrierte Lagerung äußerst hohe Anforderungen gestellt werden, die bei der zuvor erwähnten Montage in einer Waschmaschinenfabrik nicht zu erfüllen sind, ist die bekannte Antriebsvorrichtung praktisch nicht brauchbar.

Der Erfindung liegt die Aufgabe zugrunde, eine eingangs beschriebene Antriebsvorrichtung so auszugestalten, daß sie ohne eine Gefahr von unzulässigen Ungenauigkeiten im Werk des Waschmaschinenherstellers zusammengesetzt werden kann und daß sie bei weitestgehend unverändertem Laugenbehältersystem anstelle eines Gußsterns als steifes Tragteil am System montiert werden kann.

Erfindungsgemäß wird diese Aufgabe dadurch gelöst, daß der Stator des Flachmotors mit dem steifen Tragteil verbunden ist und eine scheibenförmige Kammer bildet und daß der Rotor des Flachmotors mit einem aus der Lagerhülse nach hinten austretenden Ende der Welle über eine Nabe drehfest verbunden ist, die über Wälzlager mit dem steifen Tragteil bzw. mit dem Stator drehbar verbunden ist.

Auf diese Weise kann der Motor im Herstellerwerk des Motorlieferanten komplett montiert und geprüft werden. Dort stehen die dafür geeigneten Montagehilfen zur Verfügung, so daß immer gleich genau montierte Motorbaugruppen im Waschmaschinenwerk angeliefert werden können. Hier kann diese Baugruppe anstelle eines sonst an dieser Stelle üblichen Guß-Tragsterns an die Rückwand des Laugenbehältersystems montiert werden. Dazu wird der Stator mittels mehrerer Schrauben an irgend welchen Stellen der Rückwand des Laugenbehälters befestigt. Dann wird die Welle der Wäschetrommel in die Nabe des Rotors gesteckt, der über die Wälzlager bereits mit dem Stator verbunden ist, und mit einer zentralen Schraube gesichert. Diese Arbeitsvorgänge sind denen der Befestigung eines Tragsterns und einer Riemenscheibe gemäß den bisher üblichen Waschmaschinen-Konstruktionen äußerst gleichartig, so daß vom Montagepersonal keine völlig anderen Arbeitsvorgänge erlernt werden müssen.

Die erfindungsgemäße Antriebsvorrichtung ersetzt vorteilhafterweise fast alle sonst üblichen Einrichtungen eines Waschmaschinenantriebs. Das sind ein bisher üblicher, mittels besonderer Befestigungmittel am Laugenbehälter angebrachter Motor, ein gußeiserner Tragstern für den Laugenbehälter, Gummipuffer zwischen ihm und dem Laugenbehälter, eine Riemenscheibe, ein Riemen und ein Ritzel.

In besonders vorteilhafter Weise kann die erfindungsgemäße Waschmaschine dadurch weitergebildet werden, daß der Stator zweischalig ausgebildet ist und eine hintere Deckschale mit einem Teil der Lagerhülse sowie eine vordere Montageschale mit einem zweiten Teil der Lagerhülse aufweist, daß an der Innenmantelfläche eines äußeren umlaufenden Flansches der vorderen Montageschale innerhalb der scheibenförmigen Kammer eine Mehrzahl von Statorwicklungen gleichmäßig verteilt sind und daß die scheibenförmige Kammer von hinten durch die mit dem Flansch mehrfach verschraubte Deckschale verschlossen ist. Hierdurch hat der Stator einen großen Durchmesser und viele gleichmäßig verteilte, elektronisch kommutierbare Wicklungen, die für den Läufer eine extrem große Dehzahlspreizung erlauben und ihm in jeder Drehzahl einerseits einen ruhigen Lauf geben und andererseits ein sehr großes Drehmoment verschaffen.

Eine weitere vorteilhafte Ausbildung der erfindungsgemäßen Antriebseinrichtung, bei der die vordere Montageschale an der Außenmantelfläche ihres Flansches annähernd gleichmäßig verteilte Schraubenlöcher zur Verbindung mit dem Laugenbehälter aufweist, führt zu einer völlig gleichartigen Verbindung des Motor mit dem Laugenbehälter wie bei einem Tragstern. Daher muß der Laugenbehälter an dieser Stelle keine Veränderung erfahren.

Wenn die Montageschale der erfindungsgemäßen Antriebseinrichtung gemäß einer weiteren vorteilhaften Weiterbildung auf einem gedachten Kreis um die Lagerhülse verteilte Schraubenlöcher zur Verbindung mit Teilen des Laugenbehälters aufweist, kann auch an dieser Stelle eine übereinstimmende Ausgestaltung des Laugenbehälters, wie sie bei der Montage mit einem Tragstern bereits vorhanden ist, beibehalten werden.

Wenn die Deckschale nicht ohnehin bereits so strukturiert ist, daß sie einen unmittelbaren Zugriff auf die Schrauben des gedachten Kreises zuläßt, empfiehlt sich die Anwendung einer weiteren vorteilhaften Weiterbildung der Erfindung, bei der der Rotor und die Deckschale auf dem gedachten Kreis um die Lagerhülse verteilte Montagelöcher aufweisen.

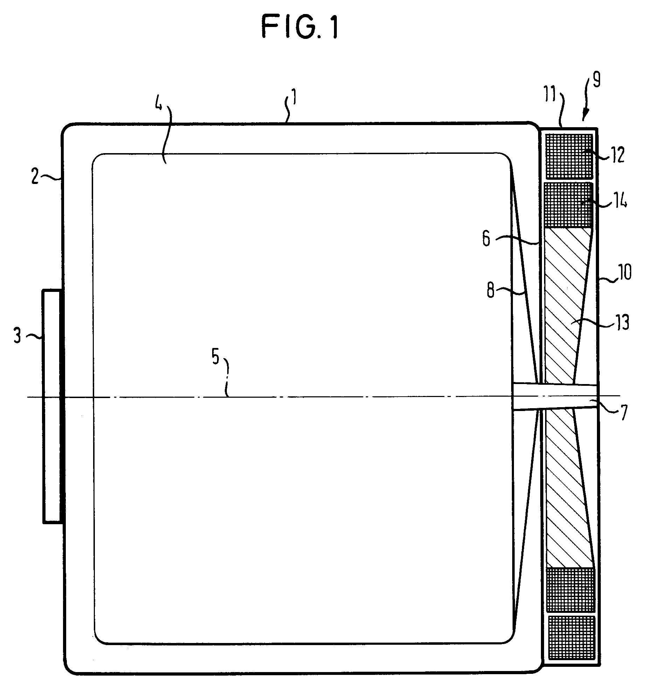

Anhand eines in der Zeichnung dargestellten Ausführungsbeispiels ist die Erfindung nachstehend erläutert. Es zeigen
- Fig.1: eine schematische Darstellung eines Waschmaschinen-Laugenbehälters mit einer innenliegend horizontal gelagerten Wäschetrommel, deren Antriebswelle in der Rotor eines erfindungsgemäßen Flachmotors eingesteckt ist und
- Fig. 2: eine vergrößerte und teilweise geschnitten dargestellte Detail-Ansicht des an der Rückwand montierten Flachmotors gemäß Fig. 1.

Der Laugenbehälter 1 ist auf hier nicht näher dargestellte Weise in einem ebenfalls nicht dargestellten Gehäuse einer Waschmaschine schwingend gelagert. An seiner Vorderwand 2 hat er eine Öffnung 3 zum Be- und Entladen der Wäschetrommel 4, die auf der horizontal liegenden Achse 5 in der Rückwand 6 des Laugenbehälters 1 drehbar gelagert ist. Dazu dient die Welle 7, die an der Rückwand 8 der Wäschetrommel 4 drehfest mit ihr verbunden ist.

An der Rückwand 6 des Laugenbehälters 1 ist ein Flachmotor 9 montiert, dessen Statorgehäuse 10 drehfest mit der Rückwand 6 verbunden ist. An der Innenmantelfläche des Flansches 11 des Statorgehäuses 10 sind mehrere Statorwicklungen 12 gleichmäßig verteilt und korrespondieren während der Drehung des Rotors 13 abwechselnd mit dessen Polen 14, die ebenfalls aus (hier allerdings kurzgeschlossenen) Wicklungen oder aus Permanentmagneten bestehen können. Dadurch kann der Flachmotor seine Antriebsmomente unmittelbar über den Wellenzapfen 7 in die Wäschetrommel 4 einleiten. Dabei nimmt der Stator des Flachmotors auch alle Lagerkräfte auf.

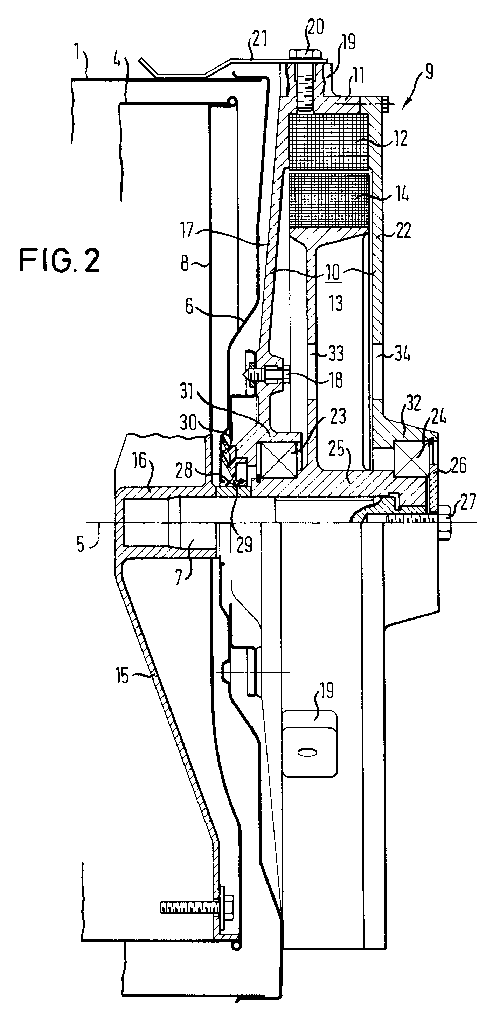

Gemäß Fig. 2 ist die Rückwand 8 der Wäschetrommel 4 mit einem Tragstern 15 versteift, dessen Nabe 16 mit einem Wellenzapfen 7 drehfest verbunden ist. An der Rückwand 6 des Laugenbehälters 1 ist ferner die Montageschale 17 des Statorgehäuses 10 drehfest verschraubt (unverlierbare Schrauben 18). Damit ein Waschmaschinen-Monteur im Herstellerwerk für Waschmaschinen den bereits komplett zusammengesetzten Motor an der Rückwand des Laugenbehälters montieren kann, sind in der Rotorscheibe 13 und in der Deckschale 22 auf dem gedachten Kreis der Verteilung der Schrauben 18 gleich viele Zugangslöcher 33 und 34 angeordnet, wobei die Löcher 34 in der Deckschale auch mit den Schrauben 18 fluchten. Außerdem trägt der Flansch 11 des Statorgehäuses 10 an seiner Außenseite mehrere, vorzugsweise drei, um den Umfang des Laugenbehälters 1 verteilt angeordnete Befestigungsaugen 19, die mittels Schrauben 20 zusätzlich über an den Laugenbehälter 1 angeschweißte Laschen 21 eine feste Verbindung zum Laugenbehälter ergeben. Das Statorgehäuse 10 wird komplettiert durch die rückwärtige Deckschale 22, die an der rückseitigen Stirnfläche des Flansches 11 gleichmäßig beabstandet verschraubt ist.

Die zentralen Bohrungen der Montageschale 17 und der Deckschale 22 bilden Lagersitze 31 und 32 für Wälzlager 23 und 24, deren Innenringe auf der Nabe 25 des Rotors 13 press sitzen. In diese Nabe 25 ist der Wellenzapfen 7 mit einer guten Passung eingesteckt und am äußeren Ende mittels einer Druckscheibe 26 und einer zentralen Schraube 27 über den Innenring des Wälzlagers 24 drehfest gesichert. Dabei ist zwischen der Nabe 16 des Tragsterns 15 der Wäschetrommel 4 und der Nabe 25 des Rotors 13 ein Abstandsring 28 eingepreßt, der auf seiner Außenseite poliert ist. Mit einem Absatz der Zentralbohrung der Montageschale 17 ist ein Dichtring 29 verbunden, dessen wellenseitige Dichtlippen mittels eines Federringes auf der polierten Außenseite des Abstandsringes 28 gehalten werden. Seine zur Rückwand 6 des Laugenbehälters 1 weisenden Dichtlippen legen sich mit axialem Druck an eine ebenfalls polierte Ringfläche 30 des Rückwandbleches. Dadurch wird aus dem Laugenbehälter strebende Lauge am Austreten gehindert.

## Patentansprüche

1. Antriebsvorrichtung für eine von vorn beschickbare Waschmaschine mit einer innerhalb einer Lagerhülse eines an der Rückwand eines Laugenbehälters angebrachten, steifen Tragteils über eine wenigstens annähernd horizontal liegende Welle fliegend gelagerten Wäschetrommel, die durch einen ebenfalls an der Rückseite des Laugenbehälters angebrachten Flachmotor direkt angetrieben ist, **dadurch gekennzeichnet**, daß der Stator (10 bis 12) des Flachmotors (9) mit dem steifen Tragteil (17) verbunden ist und eine scheibenförmige Kammer bildet und daß der Rotor (13, 14, 25) des Flachmotors (9) mit einem aus der Lagerhülse (31, 32) nach hinten austretenden Ende der Welle (7) über eine Nabe (25) drehfest verbunden ist, die über Wälzlager (23, 24) mit dem steifen Tragteil (17) bzw. mit dem Stator (10 bzw. 17, 22) drehbar verbunden ist.

2. Antriebsvorrichtung nach Anspruch 1, **dadurch gekennzeichnet**, daß der Stator (10) zweischalig ausgebildet ist und eine hintere Deckschale (22) mit einem Teil (32) der Lagerhülse sowie eine vordere Montageschale (17) mit einem zweiten Teil (31) der Lagerhülse aufweist, daß an der Innenmantelfläche eines äußeren umlaufenden Flansches (11) der vorderen Montageschale (17) innerhalb der scheibenförmigen Kammer eine Mehrzahl von Statorwicklungen (12) gleichmäßig verteilt sind und daß die scheibenförmige Kammer von hinten durch die mit dem Flansch (11) mehrfach verschraubte Deckschale (22) verschlossen ist.

3. Antriebsvorrichtung nach Anspruch 1 oder 2, **dadurch gekennzeichnet**, daß die vordere Montageschale (17) an der Außenmantelfläche ihres Flansches (11) annähernd gleichmäßig verteilte Schraubenlöcher (Befestigungsaugen 19) zur Verbindung mit dem Laugenbehälter (1) aufweist.

4. Antriebsvorrichtung nach einem der Ansprüche 1 bis 3, **dadurch gekennzeichnet**, daß die vordere Montageschale (17) auf einem gedachten Kreis um die Lagerhülse (31, 32) verteilte Schraubenlöcher zur Verbindung mit Teilen des Laugenbehälters (1) aufweist.

5. Antriebsvorrichtung nach Anspruch 4, **dadurch gekennzeichnet**, daß der Rotor (13) und die Deckschale (22) auf dem gedachten Kreis um die Lagerhülse (31, 32) verteilte Zugangslöcher (33, 34) aufweisen.
